# EUROPEAN PATENT APPLICATION

(11) **EP 4 497 662 A1**
(43) Date of publication of application: **29.01.2025**
(21) Application number: 23796244.4
(22) Date of filing: 20.04.2023
(51) Int. Cl.: B62D 33/06, B62D 25/08

(54) **HIGH-ROOF STRUCTURE FOR TRUCK**

(30) Priority: 25.04.2022 JP 2022071473
(71) Applicant: Daimler Truck AG, 70771 Leinfelden-Echterdingen (DE)
(72) Inventor: NAKAZATO, Jun, Kawasaki-shi, Kanagawa 211-8522 (JP); TAKARADA, Atsushi, Kawasaki-shi, Kanagawa 211-8522 (JP); IGUCHI, Taishi, Kawasaki-shi, Kanagawa 211-8522 (JP); SURENDRAN, Karthik Syamala, Bengaluru 560066 (IN); SUBRAMANIAM, Murugan, Bengaluru 560066 (IN)
(74) Representative: Hofstetter, Schurack & Partner
(86) International application number: PCT/JP2023/015795
(87) International publication number: WO 2023/210502

(57) **Abstract**

A high roof structure (1) of a truck is mounted on a cab body (10) that has an open ceiling. The high roof structure (1) includes a pair of front side frames (2) and a pair of rear side frames (3) that support the roof panel inclining so as to gradually increase a vehicle height from a front side to a rear side. The front side frames (2) respectively erect from a pair of side faces (15) spaced apart from each other in a vehicle width direction (D2) in the cab body (10). The rear side frames (3) respectively erect from the pair of side faces (15) on the rear side of the front side frames (2) to be higher than the front side frames (2). At least one of the rear side frames (3) is provided with a fragile portion (40) that has a low strength relative to portions adjacent to the fragile portion (40) in a vehicle height direction (D3).

## Description

### [Technical Field]

The present disclosure relates to a high roof structure applied to a cab of a truck.

### [Background Art]

For example, heavy-duty trucks sometimes adopt a high roof structure which provides a roof panel at a higher position than a normal position to expand a compartment formed in a cab. Such a high roof structure is mounted on a cab body having an open ceiling (see, for example, Patent Literature 1).

### [Citation List]

### [Patent Literature]

[Patent Document 1] JP 2017-144967 A

### [Summary of Invention]

### [Technical Problem]

The cab with the high roof structure as described above has a small vehicle height difference from a mounted object such as a cargo box disposed behind, and thus, it is difficult to mount a drag foiler (air deflector) for reducing air resistance during traveling. In view of this, in order to reduce traveling resistance without using a drag foiler, some high roof structures adopt a roof panel that inclines so as to gradually increase the vehicle height from a front side to a rear side.

In the high roof structure with such an inclined roof panel, when a load is input from above, the load tends to concentrate on a rear portion where the vehicle height is relatively high. For this reason, in the high roof structure, since the rear portion is largely crushed before a front portion receives the load, deformation may extend to the cab body. Therefore, the conventional high roof structure has room for improvement in suppressing the deformation of the cab body by securing strength against the load from above.

The present disclosure has been devised in view of the above-mentioned problems, and an object thereof is to suppress deformation of a cab body against a load from above.

### [Solution to Problem]

The present disclosure has been made to solve at least a part of the above problems, and can be realized as the following aspects or application examples.
(1) A high roof structure of a truck according to the present application example, which is mounted on a cab body that has an open ceiling and provided with a roof panel that inclines so as to gradually increase a vehicle height from a front side to a rear side, includes: a pair of front side frames that respectively erect from a pair of side faces spaced apart from each other in a vehicle width direction in the cab body and that support the roof panel; a pair of rear side frames that respectively erect from the pair of side faces on the rear side of the front side frames to be higher than the front side frames and that support the roof panel; and a fragile portion provided in at least one of the rear side frames and having a low strength relative to portions adjacent to the fragile portion in a vehicle height direction.

According to the present application example, since the rear side frames erect higher than the front side frames, a load input from above is first input to the rear side frames before being input to the front side frames. As a result, a compressive load in the vehicle height direction acts on the rear side frames, which causes the fragile portion having a relatively low strength to be crushed first in the vehicle height direction, reducing the height difference between the front side frames and the rear side frames. Then, after the rear side frames are compressed to the same height as the front side frames, a downward load is input to the front side frames as well as to the rear side frames.

Accordingly, the load is distributed not only to the rear side frames but also to the front side frames, so that the load is inhibited from concentrating on the rear side frames. Therefore, after the fragile portion is crushed, large deformation of the rear side frames is suppressed. As such, according to the present application example, when the load is input from above, since the fragile portion is crushed first, both the front side frames and the rear side frames can function as tension rods to act against the load. Therefore, the strength can be secured against the load from above. Hence, the deformation of the cab body can be suppressed.

(2) The high roof structure according to the present application example may include: a front roof frame that connects respective upper ends of the front side frames to each other; and a rear roof frame that connects respective upper ends of the rear side frames to each other.

According to such a configuration, the load input from above can be transmitted to each of the front side frames and the rear side frames through the front roof frame and the rear roof frame. In addition, since the front roof frame and the rear roof frame function as tension rods, the front side frames and the rear side frames can be suppressed from collapsing inward in the vehicle width direction.

For these reasons, when the load is input from above, the load can be more reliably distributed to each of the front side frames and the rear side frames. Therefore, each of the front side frames and the rear side frames can more reliably oppose the load input from above. Thus, the deformation of the cab body can be further suppressed.

(3) The high roof structure according to the present application example may include: a long roof frame that extends in an inclined manner along the roof panel from a front face disposed in front of the pair of side faces in the cab body and that is coupled to the front roof frame and the rear roof frame.

According to such a configuration, the load input from above can be transmitted from the long roof frame to the front side frames and the rear side frames through the front roof frame and the rear roof frame, respectively. In addition, since the front roof frame and the rear roof frame are reinforced by the long roof frame, the front side frames and the rear side frames can be more reliably suppressed from collapsing inward in the vehicle width direction.

For these reasons, when the load is input from above, the load can be further reliably distributed to each of the front side frames and the rear side frames. Therefore, each of the front side frames and the rear side frames can more reliably oppose the load input from above. Thus, the deformation of the cab body can be further suppressed.

(4) In the high roof structure according to the present application example, a dimension in the vehicle height direction of the fragile portion may be set to be equal to a height difference between the front side frames and the rear side frames.

According to such a configuration, when the load is input from above, the rear side frames with the crushed fragile portion can be equal to the front side frames in height. This causes the load to be more reliably distributed to both the front side frames and the rear side frames, and thus, the load can be more reliably suppressed from concentrating on the rear side frames. Therefore, the deformation of the cab body can be further suppressed.

(5) In the high roof structure according to the present application example: the rear side frames may include an inner frame and an outer frame that is disposed outside the inner frame in the vehicle width direction and that forms a closed cross section with the inner frame; and the fragile portion may include a missing part at which the inner frame is divided.

According to such a configuration, in the rear side frames, the fragile portion can certainly have a low strength relative to the portion at which the closed cross section is formed. Thus, when the load is input from above, the fragile portion of the rear side frames can be more reliably crushed. As a result, the load is more reliably distributed to both the front side frames and the rear side frames, so that the deformation of the cab body can be further suppressed.

(6) In the high roof structure according to the present application example, the fragile portion may include two recesses that each extend in a vehicle length direction in the rear side frames and that are spaced apart from each other in the vehicle height direction.

According to such a configuration, when the load is input from above, the fragile portion can buckle at the recesses. This helps the portion between the recesses in the rear side frames easily deform, so that the fragile portion can be more reliably crushed in the vehicle height direction. As a result, the load is more reliably distributed to both the front side frames and the rear side frames, and thus, the deformation of the cab body can be further suppressed.

(7) The high roof structure according to the present application example may include an upper frame that connects the rear side frames to each other on the rear side of the rear side frames and above the fragile portion.

According to such a configuration, when the load is input from above, the rear side frames can be suppressed from collapsing inward in the vehicle width direction without hindering the crushing of the fragile portion. In addition, according to the upper frame, when the load is input from above, the respective crushing speeds in the vehicle height direction of the rear side frames can be equal to each other.

Thus, distribution of the load to the pair of rear side frames can be equalized. This can suppress not only the deviation of the load due to the height difference (front-rear difference) between the front side frames and the rear side frames, but also the deviation of the load due to the crushing speed difference (left-right difference) between the pair of rear side frames. Therefore, the load can be more appropriately distributed to each of the front side frames and the rear side frames. Hence, the deformation of the cab body can be further suppressed.

(8) The high roof structure according to the present application example may include a lower frame that connects the rear side frames to each other on the rear side of the rear side frames and below the fragile portion.

According to such a configuration, when the load is input from above, the rear side frames can be reinforced without hindering the crushing of the fragile portion. Therefore, the fragile portion of the rear side frames can be more reliably crushed, and after the crushing of the fragile portion, large deformation of the rear side frames can be suppressed. As a result, the load can be more reliably distributed to both the front side frames and the rear side frames, so that the deformation of the cab body can be further suppressed.

(9) In the high roof structure according to the present application example: the fragile portion may be provided only in a first one of the rear side frames; and a second one of the rear side frames, in which the fragile portion is not provided, may include a bent portion bent inward in the vehicle width direction for arranging an intake duct.

As compared with a rear side frame without the bent portion, the rear side frame with the bent portion easily collapses inward in the vehicle width direction when the load is input from above, and is easily crushed in the vehicle height direction. Due to this, if the fragile portion is not provided in either one of the rear side frames, the crushing speed difference easily occurs between the pair of rear side frames.

In contrast, if the fragile portion is provided only in the first one of the rear side frames, when the load is input from above, the fragile portion of the first one of the rear side frames is crushed in the vehicle height direction. This causes the first one of the rear side frames to be compressed in the vehicle height direction, so that even if the second one of the rear side frames, which includes the bent portion, collapses inward in the vehicle width direction, the crushing speed difference can be reduced between the pair of rear side frames.

Therefore, even in cases where the bent portion is provided in the second one of the rear side frames, the distribution of the load to the pair of rear side frames can be equalized. This can suppress not only the deviation of the load due to the height difference between the front side frames and the rear side frames, but also the deviation of the load due to the crushing speed difference between the pair of rear side frames. Hence, the deformation of the cab body can be further suppressed.

### [Advantageous Effects of Invention]

According to the present disclosure, the deformation of the cab body can be suppressed against the load from above.

### [Brief Description of Drawings]

FIG. 1 is a perspective view of a front portion of a truck to which a high roof structure according to a first embodiment is applied.
FIG. 2 is a perspective view of the high roof structure of FIG. 1 omitting a roof panel.
FIG. 3 is a rear view of the high roof structure of FIG. 2.
FIG. 4 is an exploded perspective view of a rear side frame included in the high roof structure of FIG. 2.
FIG. 5 is a cross-sectional view (X-X arrow sectional view of FIG. 4) illustrating a structure of a closed cross section of the rear side frame of FIG. 4.
FIG. 6 is a right side view illustrating the high roof structure of FIG. 2 together with an upper portion of a cab body.
FIG. 7 is a schematic right side view explaining effects of the high roof structure of FIG. 2.
FIG. 8 is a perspective view (diagram corresponding to FIG. 1) of a front portion of a truck to which a high roof structure according to a second embodiment is applied
FIG. 9 is a perspective view (diagram corresponding to FIG. 2) of the high roof structure of FIG. 8 omitting a roof panel.
FIG. 10 is a rear view (diagram corresponding to FIG. 3) of the high roof structure of FIG. 9.

### [Description of Embodiments]

Embodiments of the present disclosure will now be described with reference to drawings. The following embodiments are merely illustrative and are not intended to preclude the application of various modifications and techniques not explicitly set forth in the embodiments. Each configuration of the following embodiments can be implemented by various modifications without departing from the gist thereof. Also, it can be selected as necessary, or can be combined as appropriate.

### <1. First Embodiment>

### <1-1. Configuration>

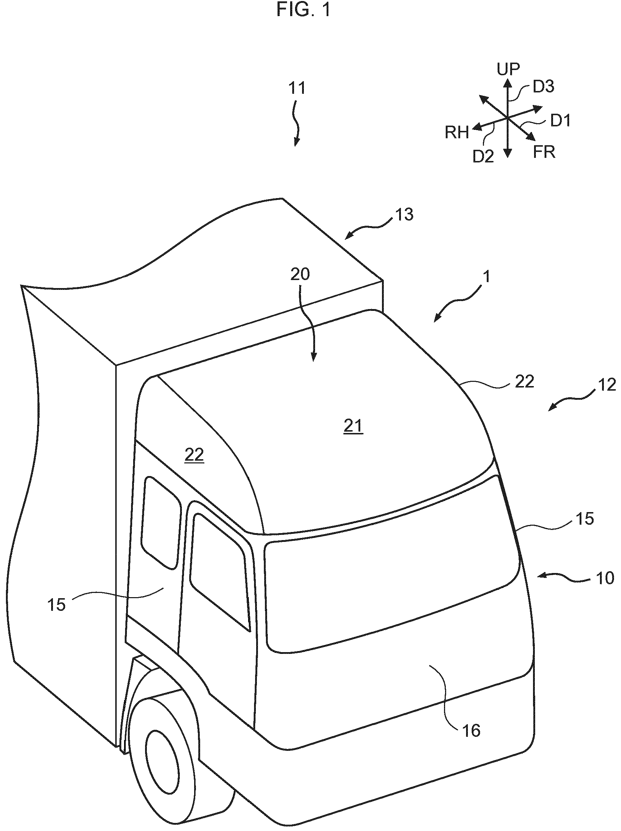

As illustrated in FIG. 1, a high roof structure 1 of a truck according to a first embodiment (hereinafter, also simply referred to as "high roof structure 1") is applied to a cab 12 of a truck 11. The truck 11 is, for example, a heavy-duty truck of a cab over type, and is equipped with a non-illustrated engine disposed below the cab 12. Behind the cab 12, a mounted object 13 such as a cargo box is mounted. In the drawings, a front side (forward direction) of the truck 11 is indicated as "FR", an upper side of the truck 11 is indicated as "UP", and a right side of the truck 11 is indicated as "RH".

In the high roof structure 1, to expand a compartment formed in the cab 12, a roof panel 20 that forms a top surface of the cab 12 is provided at a higher position as compared to a normal roof structure. The cab 12 with the high roof structure 1 as described above is also referred to as a "high roof cab" and the truck 11 with the high roof structure 1 is also referred to as a "high roof vehicle". In the high roof cab and the high roof vehicle, the compartment is expanded upward by the high roof structure 1, so that habitability of the compartment is enhanced. This elevates comfortableness when the driver, the passenger, etc. rests (for example, takes a nap) in the compartment during long distance travels.

In the high roof structure 1, the roof panel 20 is mounted on a cab body 10 that has an open ceiling by, for example, spot welding. The cab body 10 is shaped into a substantial box without a lid, and defines the compartment in cooperation with the high roof structure 1. Specifically, the cab body 10 includes a pair of side faces 15 spaced apart from each other in a vehicle width direction (left-right direction) D2, a front face 16 disposed in front of the side faces 15, a rear face (not illustrated) disposed behind the side faces 15, and a bottom face (not illustrated) coupled to lower ends of the above-mentioned faces. All of the side faces 15, the front face 16, and the rear face erect in a vehicle height direction (up-down direction) D3, forming walls of the compartment. Meanwhile, the bottom face is provided so as to extend in a vehicle length direction (front-rear direction) D1 and the vehicle width direction D2, forming a floor surface of the compartment.

In order to reduce the air resistance during traveling of the truck 11, the roof panel 20 smoothly inclines so as to gradually increase a vehicle height from the front side to the rear side. In the high roof structure 1, instead of providing a drag foiler (air deflector), by forming the roof panel 20 itself in an inclined shape as the above, the air resistance is reduced.

The present embodiment illustrates the roof panel 20 in a symmetrical shape. Specifically, the roof panel 20 includes a central panel 21 that constitutes the front and the top thereof, and a pair of side panels 22 respectively disposed on the left and right sides of the central panel 21. The central panel 21 and the side panels 22 are integrated by, for example, welding. However, specific configuration of the roof panel 20 is not limited to the above example.

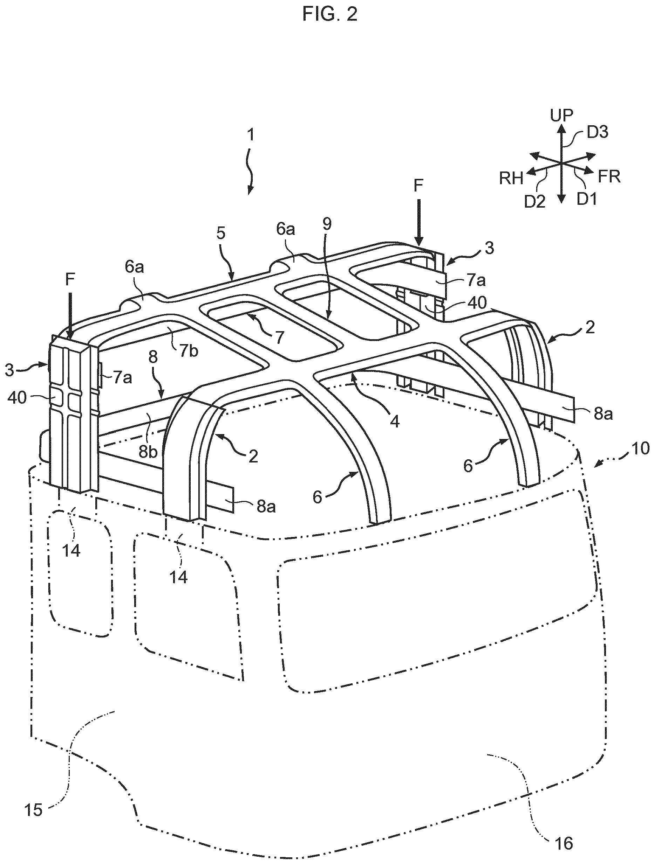

The high roof structure 1 of the present embodiment includes, as frames that support the roof panel 20, various frames 2 to 9 illustrated in FIG. 2. These frames 2 to 9 are arranged inside the roof panel 20 (in a space below the central panel 21 and between the side panels 22). Thus, the frames 2 to 9 are all covered by the roof panel 20, and are not exposed to exteriors of the truck 11 and the cab 12.

In detail, the frames 2 to 9 are: front side frames 2 and rear side frames 3, each of which is a longitudinal member that extends in the vehicle height direction D3; a front roof frame 4, a rear roof frame 5, an upper frame 7, and a lower frame 8, each of which is a lateral member that extends in a horizontal direction (the vehicle length direction D1 and/or the vehicle width direction D2); and a long roof frame 6 and an auxiliary roof frame 9, each of which extends in an inclined manner along the roof panel 20. Incidentally, the front roof frame 4, the rear roof frame 5, the long roof frame 6, and the auxiliary roof frame 9 that support the central panel 21 of the roof panel 20 may be integrated (or partially integrated) as a single center frame.

The front side frames 2 and the rear side frames 3 are provided in pairs, forming four legs that support the roof panel 20. In detail, the front side frames 2 form front legs and the rear side frames 3 form rear legs. In the high roof structure 1, four of the front side frames 2 and the rear side frames 3 mainly oppose a load F input from above.

The pair of front side frames 2 respectively erect from the pair of side faces 15 of the cab body 10 and are arranged along the side panels 22. The present embodiment illustrates the front side frames 2 that extend upward from the side faces 15 and then smoothly curve inward in the vehicle width direction D2.

In contrast, the pair of rear side frames 3 respectively erect from the pair of side faces 15 of the cab body 10 on the rear side of the front side frames 2 and are arranged along the pair of side panels 22. The rear side frames 3 erect higher than the front side frames 2. That is, upper ends of the rear side frames 3 are positioned higher than upper ends of the front side frames 2. In the present embodiment, the entire parts of the rear side frames 3 erect upward substantially straight from the side faces 15.

In the present embodiment, since the roof panel 20 is in a symmetrical shape, the pair of front side frames 2 are shaped equally (mirror-symmetrical with respect to the center in the vehicle width direction D2) and the pair of rear side frames 3 are also shaped equally. However, the pair of rear side frames 3 may be shaped differently. In the present embodiment, each of the rear side frames 3 is provided with a fragile portion 40 that has a low strength relative to portions adjacent to the fragile portion in the vehicle height direction D3. Specific structures of the rear side frames 3 and the fragile portions 40 will be described later.

Each lower end of the front side frames 2 and the rear side frames 3 is coupled to a part reinforced by a stiffener 14 in the side faces 15 of the cab body 10. The stiffener 14 is a member that reinforces a part of the side faces 15, and is provided, for example, in a space between an outer panel (a face on the outside in the vehicle width direction D2) of the side face 15 and an inner panel (a face on the inside in the vehicle width direction D2) of the side face 15. The present embodiment illustrates the side faces 15 each provided with two stiffeners 14 spaced apart from each other in the vehicle length direction D1.

The front roof frame 4 connects the upper ends of the front side frames 2 to each other. The front roof frame 4 functions as a tension rod between the front side frames 2, and thereby, suppresses the front side frames 2 from collapsing inward in the vehicle width direction D2. Similarly, the rear roof frame 5 connects the upper ends of the rear side frames 3 to each other. The rear roof frame 5 functions as a tension rod between the rear side frames 3, and thereby, suppresses the rear side frames 3 from collapsing inward in the vehicle width direction D2.

Both the front roof frame 4 and the rear roof frame 5 of the present embodiment extend substantially straight along the vehicle width direction D2. Since the upper ends of the rear side frames 3 are positioned on the rear side of and higher than the upper ends of the front side frames 2 as described above, the rear roof frame 5 is disposed on the rear side of and higher than the front roof frame 4.

The long roof frame 6 extends in the inclined manner along the roof panel 20 from the front face 16 of the cab body 10 toward the rear side, and is coupled to both the front roof frame 4 and the rear roof frame 5. As such, the long roof frame 6 extends from the front face 16 of the cab body 10 to at least the rear roof frame 5 via the front roof frame 4. The long roof frame 6 of the present embodiment has an extension portion 6a that extends rearward and downward further than the rear roof frame 5. The extension portion 6a is coupled to the upper frame 7.

The present embodiment illustrates the high roof structure 1 in which a pair of long roof frames 6 are spaced apart from each other in the vehicle width direction D2 and one auxiliary roof frame 9 is disposed between the pair of long roof frames 6. However, the respective numbers of the long roof frame 6 and the auxiliary roof frame 9 provided in the high roof structure 1 are not particularly limited. The long roof frames 6 and the auxiliary roof frame 9 may be omitted from the high roof structure 1.

The auxiliary roof frame 9 is formed to be shorter than the long roof frame 6, extends in the inclined manner along the roof panel 20 like the long roof frame 6, and is arranged in parallel with the long roof frame 6. The auxiliary roof frame 9 of the present embodiment extends substantially straight from the front roof frame 4 to the rear roof frame 5, and connects the front roof frame 4 and the rear roof frame 5 to each other. It should be noted that the auxiliary roof frame 9 is not provided with an extension portion that extends rearward or downward further than the rear roof frame 5.

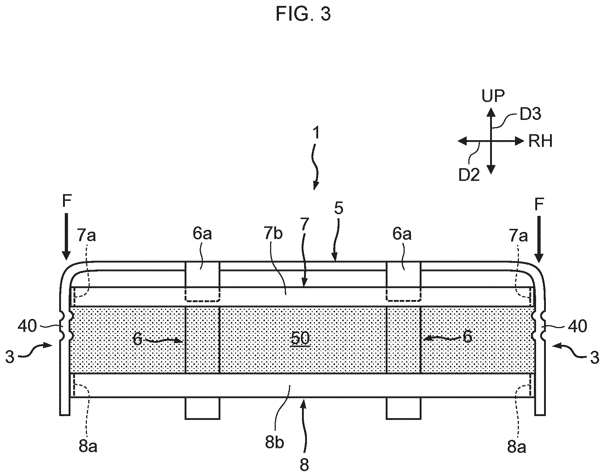

As illustrated in FIGS. 2 and 3, the upper frame 7 connects the rear side frames 3 to each other on the rear side of the rear side frames 3 and above the fragile portions 40. The upper frame 7 functions as a tension rod between the rear side frames 3, and thereby, suppresses the rear side frames 3 from collapsing inward in the vehicle width direction D2. In addition, the upper frame 7 has a function of equalizing crushing speeds of the rear side frames 3 in the vehicle height direction D3 when the load F is input to the high roof structure 1 from above.

In detail, the upper frame 7 includes: two upper arm portions 7a coupled to the insides in the vehicle width direction D2 of the rear side frames 3; and an upper connecting portion 7b connecting the upper arm portions 7a to each other on the rear side of the rear side frames 3, and forms a U-shape in which the two upper arm portions 7a each point forward when viewed from the vehicle height direction D3. The two upper arm portions 7a of the upper frame 7 are respectively coupled to the pair of rear side frames 3 above the fragile portions 40. To the upper connecting portion 7b of the upper frame 7, the extension portions 6a of the long roof frames 6 are coupled.

The lower frame 8 connects the rear side frames 3 to each other on the rear side of the rear side frames 3 and below the fragile portions 40. As such, the lower frame 8 is similar to the upper frame 7 in connecting the rear side frames 3 to each other on the rear side of the rear side frames 3, but is different from the upper frame 7 in being disposed below the fragile portions 40. The lower frame 8 disposed below the upper frame 7 has a function of reinforcing a base of the high roof structure 1.

The lower frame 8 of the present embodiment extends to the front side further than the rear side frames 3 and is coupled to the front side frames 2 as well as the rear side frames 3. Therefore, the lower frame 8 connects the pair of front side frames 2 and the pair of rear side frames 3 which form the four legs in the high roof structure 1.

In detail, the lower frame 8 includes: two lower arm portions 8a extending in the vehicle length direction D1 and coupled to the insides in the vehicle width direction D2 of the front side frames 2 and the rear side frames 3; and a lower connecting portion 8b connecting the lower arm portions 8a to each other on the rear side of the rear side frames 3, and forms a U-shape in which the two lower arm portions 8a each point forward when viewed from the vehicle height direction D3. The two lower arm portions 8a of the lower frame 8 are respectively connected to the pair of rear side frames 3 below the fragile portions 40. On the other hand, to the lower connecting portion 8b of the lower frame 8, none of other frames are coupled. Incidentally, the lower arm portions 8a may be connected to front ends of the long roof frames 6 located in front FR.

As illustrated in FIG. 3, in the present embodiment, no frames are arranged in a region 50 (the region illustrated with halftone dots in FIG. 3) surrounded by the upper frame 7, the lower frame 8, and the pair of rear side frames 3. That is, between the upper connecting portion 7b of the upper frame 7 and the lower connecting portion 8b of the lower frame 8, there is no structure that opposes the load input from above. Therefore, when the load F is input from above, other frames do not hinder the crushing in the vehicle height direction D3 of the fragile portions 40 located between the upper frame 7 and the lower frame 8. Because of this, the region 50 described above can be referred to as a region (crumble zone) that does not hinder the crushing of the fragile portions 40.

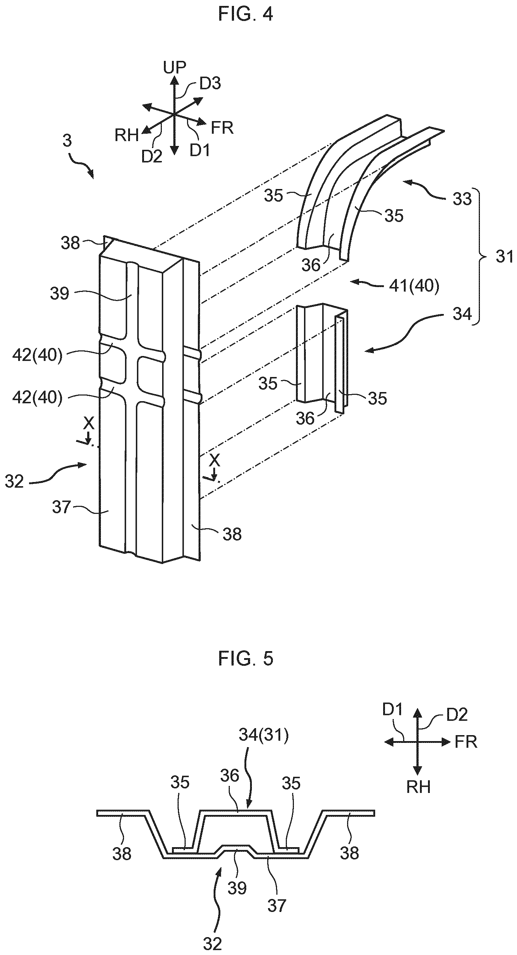

As illustrated in FIG. 4, the rear side frames 3 of the present embodiment each include: an inner frame 31 vertically divided; and an outer frame 32 disposed outside in the vehicle width direction D2 of the inner frame 31 and forming a closed cross section with the inner frame 31. The inner frame 31 and the outer frame 32 are coupled to each other by, for example, welding. FIG. 4 illustrates, of the pair of rear side frames 3, only the rear side frame 3 disposed on the right side.

Specifically, the inner frame 31 is divided into an upper member 33 and a lower member 34 which are arranged with an interval in the vehicle height direction D3. Each of the upper member 33 and the lower member 34 forms a hat-shaped cross section, and two flanges 35 extending from a web 36 are disposed in a posture that faces the outer frame 32 (outside in the vehicle width direction D2). The present embodiment exemplifies: the lower member 34 in which the web 36 and the flanges 35 extend straight along the vehicle height direction D3; and the upper member 33 disposed above the lower member 34 and extending in a curved posture such that the web 36 and the flanges 35 thereof smoothly connect to the rear roof frame 5.

Meanwhile, the outer frame 32 of the present embodiment forms a hat-shaped cross section of one size larger than that of the inner frame 31, and two flanges 38 extending from a web 37 are disposed in a posture that faces the inner frame 31 (inside in the vehicle width direction D2). As illustrated in FIG. 5, the web 37 of the outer frame 32 is joined to the flanges 35 of the inner frame 31 (the upper member 33 and the lower member 34). When the inner frame 31 and the outer frame 32 are joined to each other as such, the web 36 of the inner frame 31 and the flanges 38 of the outer frame 32 are disposed so as to be flush with each other.

In the rear side frame 3, the closed cross section is formed by the inner frame 31 and the web 37 of the outer frame 32, and a hollow surrounded by this closed cross section extends in the vehicle height direction D3. Thus, according to the rear side frame 3 with the closed cross section formed by accommodating the inner frame 31 with a relatively small hat-shaped cross section in the outer frame 32 with a relatively large hat-shaped cross section, rigidity can be increased while achieving compactification.

On the web 37 of the outer frame 32 of the present embodiment, a bead 39 for reinforcement is formed in a linear shape extending in the vehicle height direction D3. The bead 39 forms, for example, a recess dented inward (toward the inner frame 31) in the vehicle width direction D2. The bead 39 extending in the vehicle height direction D3 as such has a function of increasing rigidity against a compressive load in the vehicle height direction D3.

As illustrated in FIG. 4, the fragile portion 40 is formed to have a low strength relative to the portions adjacent to the fragile portion 40 in the vehicle height direction D3 as described above. Therefore, when the compressive load in the vehicle height direction D3 is applied to the rear side frame 3, the fragile portion 40 serves as a region (crushable zone) relatively easily crushed. The fragile portion 40 is provided in at least one of the pair of rear side frames 3. In the present embodiment, as described above, the pair of rear side frames 3 are formed to be equal to each other, and each of the rear side frames 3 is provided with the fragile portion 40.

The fragile portion 40 of the present embodiment includes a missing part 41 at which the inner frame 31 is divided and two recesses 42 each extending in the vehicle length direction D1 in the rear side frame 3. The two recesses 42 are spaced apart from each other in the vehicle height direction D3. The present embodiment exemplifies the recesses 42 arranged at a portion corresponding to the missing part 41 in the outer frame 32.

The missing part 41 is formed by the interval provided between the upper member 33 and the lower member 34 as described above. In the rear side frame 3, although the closed cross section is formed by the inner frame 31 and the outer frame 32, at the missing part 41 provided between the upper member 33 and the lower member 34, the closed cross section is not formed and the strength is intentionally reduced. Thus, the missing part 41 is formed to have a strength lower than a strength of an upper portion where the closed cross section is formed by the upper member 33 and a strength of a lower portion where the closed cross section is formed by the lower member 34. Accordingly, when the compressive load in the vehicle height direction D3 is applied to the rear side frame 3, the missing part 41 is relatively easily crushed.

In the outer frame 32, the two recesses 42 are formed in straight lines extending in the vehicle length direction D1 along a lower edge of the upper member 33 and an upper edge of the lower member 34, respectively. Each of the recesses 42 is dented, for example, inward in the vehicle width direction D2, and has a structure similar to that of the bead 39 described above. However, in contrast to the bead 39 extending in the vehicle height direction D3, the recesses 42 extending in the vehicle length direction D1 serve as base points (buckling points) that bend when the compressive load in the vehicle height direction D3 is applied. That is, as compared with the portions adjacent in the vehicle height direction D3, each of the recesses 42 has a lower strength against the compressive load in the vehicle height direction D3. Therefore, when the compressive load in the vehicle height direction D3 is applied to the rear side frame 3, the fragile portion 40 including the recesses 42 bends along the recesses 42, and the portion between the two recesses 42 is deformed so as to be crushed in the vehicle height direction D3.

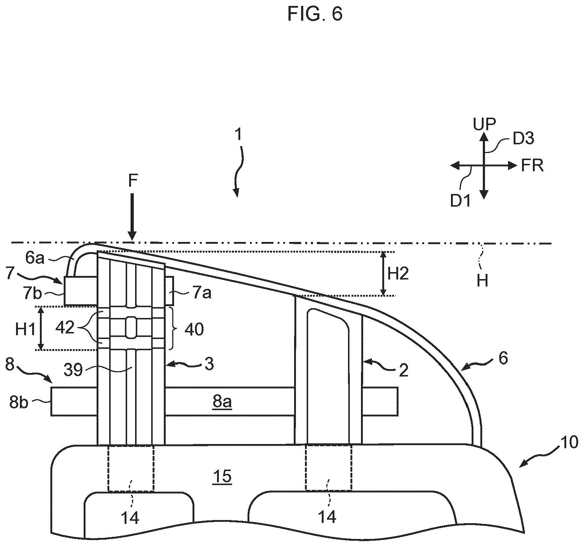

As illustrated in FIG. 6, the dimension H1 (hereinafter, also referred to as height dimension H1) in the vehicle height direction D3 of the fragile portion 40 is set to be equal to the height difference H2 between the front side frames 2 and the rear side frames 3. In other words, the height dimension H1 of the fragile portion 40 is set such that, when the entire fragile portion 40 is crushed in the vehicle height direction D3, the respective heights (positions in the vehicle height direction D3) of the upper end of the front side frame 2 and the upper end of the rear side frame 3 come to be substantially equal. However, the height dimension H1 of the fragile portion 40 does not have to be exactly the same as the height difference H2 between the front side frames 2 and the rear side frames 3, and some errors are allowed.

Although not illustrated in detail, the front side frames 2 may have structures which form closed cross sections as the rear side frames 3 do. Further, on the front side frames 2, beads similar to the above bead 39 for reinforcement may be formed in linear shapes extending in the vehicle height direction D3. However, the fragile portion 40 is not provided in the front side frames 2. Therefore, in the front side frames 2, the strength is secured over the entire area in the vehicle height direction D3.

### <1-2. Actions and Effects>

(1) In the high roof structure 1 with the roof panel 20 that inclines so as to gradually increase the vehicle height from the front side to the rear side as described above, the rear side frames 3 erect higher than the front side frames 2. Because of this, the load F input to the high roof structure 1 from above is first input to the rear side frames 3 before being input to the front side frames 2.

For example, in a regulation test, a downward load F is assumed to be input to the high roof structure 1 from a horizontal plane H (plane that extends along the vehicle length direction D1 and the vehicle width direction D2) located above the truck 11. In this case, since the load F is input from the horizontal plane H**,** a compressive load in the vehicle height direction D3 is applied to the rear side frames 3. Then, in the rear side frames 3, the fragile portions 40 formed to have a relatively low strength are first crushed in the vehicle height direction D3.

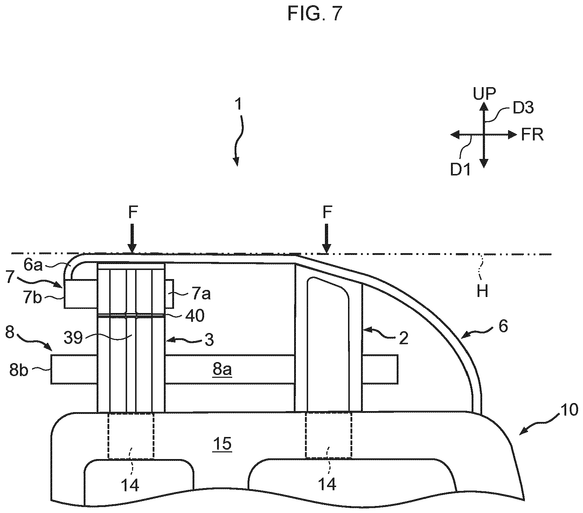

As illustrated in FIG. 7, when the fragile portions 40 are crushed in the vehicle height direction D3, the rear side frames 3 are compressed in the vehicle height direction D3, which reduces the height difference H2 between the front side frames 2 and the rear side frames 3. Consequently, after the rear side frames 3 are compressed to the same height as that of the front side frames 2, the downward load F is input to the front side frames 2 from the horizontal plane H as well as to the rear side frames 3.

As a result, the load F is distributed not only to the rear side frames 3, but also to the front side frames 2, so that the load F is suppressed from concentrating on the rear side frames 3. Therefore, after the fragile portions 40 are crushed, large deformation of the rear side frames 3 is suppressed. Namely, in the rear side frames 3, since portions other than the fragile portions 40 are formed to have a relatively high strength, after the fragile portions 40 are crushed, the portions other than the fragile portions 40 oppose the load F to suppress large deformation. Because of this, the rear side frames 3 are hardly compressed to positions lower than the front side frames 2.

Therefore, according to the high roof structure 1, when the load F is input from above, since the fragile portion 40 is crushed first, both the front side frames 2 and the rear side frames 3 can function as tension rods to act against the load F. Therefore, the strength can be secured against the load F from above. Hence, the deformation of the cab body 10 can be suppressed.

(2) According to the front roof frame 4 that connects the upper ends of the front side frames 2 to each other, the load F input to the roof panel 20 from above can be transmitted to each of the front side frames 2 through the front roof frame 4. In addition, since the front roof frame 4 functions as a tension rod, the front side frames 2 can be suppressed from collapsing inward in the vehicle width direction D2.

Similarly, according to the rear roof frame 5 that connects the upper ends of the rear side frames 3 to each other, the load F input to the roof panel 20 from above can be transmitted to each of the rear side frames 3 through the rear roof frame 5. In addition, since the rear roof frame 5 functions as a tension rod, the rear side frames 3 can be suppressed from collapsing inward in the vehicle width direction D2.

For these reasons, when the load F is input from above, the load F can be more reliably distributed to each of the front side frames 2 and rear side frames 3. Therefore, each of the front side frames 2 and rear side frames 3 can more reliably oppose the load F input from above. Thus, the deformation of the cab body 10 can be further suppressed.

(3) According to the long roof frame 6 that extends in the inclined manner along the roof panel 20 and that is coupled to the front roof frame 4 and the rear roof frame 5, the load F input to the roof panel 20 from above can be transmitted from the long roof frame 6 to the front side frames 2 and the rear side frames 3 through the front roof frame 4 and the rear roof frame 5, respectively. In addition, since the front roof frame 4 and the rear roof frame 5 are reinforced by the long roof frame 6, the front side frames 2 and the rear side frames 3 can be more reliably suppressed from collapsing inward in the vehicle width direction D2.

For these reasons, when the load F is input from above, the load F can be further reliably distributed to each of the front side frames 2 and the rear side frames 3. Therefore, each of the front side frames 2 and rear side frames 3 can more reliably oppose the load F input from above. Thus, the deformation of the cab body 10 can be further suppressed.

(4) If the height dimension H1 of the fragile portion 40 is set to be equal to the height difference H2 between the front side frames 2 and the rear side frames 3, when the load F is input from above, the rear side frames 3 with the crushed fragile portion 40 can be equal to the front side frame 2 in height. This causes the load F to be more reliably distributed to both the front side frames 2 and the rear side frames 3, and thus, the load F can be more reliably suppressed from concentrating on the rear side frames 3. Therefore, the deformation of the cab body 10 can be further suppressed.

(5) According to the rear side frames 3 forming the closed cross section by the inner frame 31 and the outer frame 32, since the rigidity increases as compared with the structure without the closed cross section, crushing can be suppressed at portions forming the closed cross section. As a result, the rear side frames 3 can further oppose the load F from above, so that the deformation of the cab body 10 can be further suppressed.

In addition, according to the fragile portion 40 including the missing part 41 at which the inner frame 31 is divided, in the rear side frames 3, the fragile portion 40 can certainly have a low strength relative to the portions at which the closed cross section is formed. Thus, when the load F is input from above, the fragile portion 40 of the rear side frames 3 can be more reliably crushed. As a result, the load F is more reliably distributed to both the front side frames 2 and the rear side frames 3, so that the deformation of the cab body 10 can be further suppressed.

Further, since the missing part 41 is formed by the division of the inner frame 31 disposed on the inside in the vehicle width direction D2 of the outer frame 32, the missing part 41 can be covered by the outer frame 32 from the outside in the vehicle width direction D2. Therefore, as compared with a case where the missing part 41 is exposed to the outside in the vehicle width direction D2, it is possible to secure facility in attaching the roof panel 20 to the rear side frames 3 and strength for supporting the roof panel 20 by the rear side frames 3.

(6) According to the fragile portion 40 including the two recesses 42 that each extend in the vehicle length direction D1 in the rear side frames 3 and that are spaced apart from each other in the vehicle height direction D3, when the load F is input from above, the fragile portion 40 can buckle at the recesses 42. This helps the portion between the recesses 42 in the rear side frames 3 easily deform, so that the fragile portion 40 can be more reliably crushed in the vehicle height direction D3. As a result, the load F is more reliably distributed to both the front side frames 2 and the rear side frames 3, and thus, the deformation of the cab body 10 can be further suppressed.

(7) According to the upper frame 7 that connects the rear side frames 3 to each other on the rear side of the rear side frames 3 and above the fragile portion 40, when the load F is input from above, the rear side frames 3 can be suppressed from collapsing inward in the vehicle width direction D2 without hindering the crushing of the fragile portion 40. In addition, according to the upper frame 7, when the load F is input from above, the respective crushing speeds in the vehicle height direction D3 of the rear side frames 3 can be equal to each other.

Thus, the distribution of the load F to the pair of rear side frames 3 can be equalized. This can suppress not only the deviation of the load F due to the height difference H2 (front-rear difference) between the front side frames 2 and the rear side frames 3, but also the deviation of the load F due to the crushing speed difference (left-right difference) between the pair of rear side frames 3. Therefore, the load F can be more appropriately distributed to each of the front side frames 2 and the rear side frames 3. Hence, the deformation of the cab body 10 can be further suppressed.

(8) According to the lower frame 8 that connects the rear side frames 3 to each other on the rear side of the rear side frames 3 and below the fragile portion 40, when the load F is input from above, the rear side frames 3 can be reinforced without hindering the crushing of the fragile portion 40. Therefore, the fragile portion 40 of the rear side frames 3 can be more reliably crushed, and after the fragile portion 40 is crushed, large deformation of the rear side frames 3 can be suppressed. As a result, the load F can be more reliably distributed to both the front side frames 2 and the rear side frames 3, so that the deformation of the cab body 10 can be further suppressed.

(9) If a frame extends in the vehicle height direction D3 in the region 50 surrounded by the upper frame 7, the lower frame 8, and the rear side frames 3, when the load F is input from above, the crushing of the fragile portion 40 may be hindered. On the other hand, if no frames are disposed in the region 50, the crushing of the fragile portion 40 is not hindered, so that the fragile portion 40 can be more reliably crushed. As a result, the load F can be more reliably distributed to both the front side frames 2 and the rear side frames 3, and thus, the deformation of the cab body 10 can be further suppressed.

(10) According to the lower frame 8 that extends to the front side further than the rear side frames 3 and that is coupled to the front side frames 2, the front side frames 2 and the rear side frames 3, which serve as the base, are connected by the lower frame 8, so that the high roof structure 1 can be effectively reinforced. Therefore, it is possible to more effectively oppose the load from above by the front side frames 2 and the rear side frames 3. Thus, the deformation of the cab body 10 can be further suppressed.

### <2. Second Embodiment>

### <2-1. Configuration>

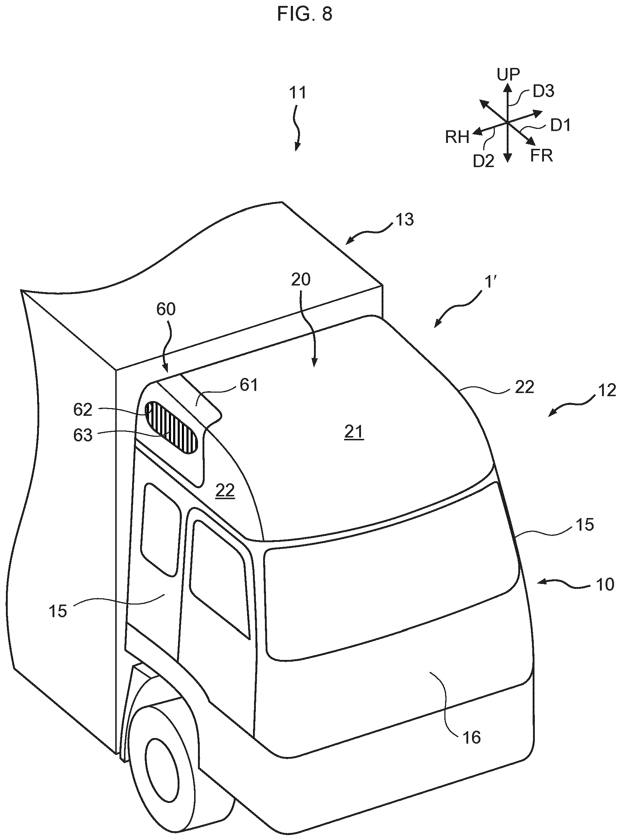

As illustrated in FIG. 8, a high roof structure 1' according to a second embodiment differs from the high roof structure 1 of the first embodiment described above in that an intake duct 60 is embedded in the cab 12 to which the high roof structure 1' is applied. Hereinafter, elements identical or corresponding to those described in the first embodiment are denoted by the same reference numbers, and repetitive descriptions thereof will be omitted.

The intake duct 60 is a device for feeding air to the engine mounted on the truck 11, and includes a snorkel (body) 61 provided at the top of the cab 12 and a non-illustrated duct provided on the rear side of the cab 12. The snorkel 61 of the present embodiment is embedded in a right upper rear corner of the cab 12 and takes in the outside air through an opening 62 directed to the right side. Meanwhile, the duct is in communication with the snorkel 61, and is disposed along the rear face of the cab body 10, in the space between the cab body 10 and the mounted object 13. A louver 63 is provided in the opening 62.

The snorkel 61 is installed on the top of a roof panel in a normal roof structure, but is embedded in the roof panel 20 in the high roof structure 1. Specifically, the snorkel 61 is arranged in a concave provided in the roof panel 20. In addition, an outer face of the snorkel 61 and an outer face of the roof panel 20 are formed so as to be smoothly continuous with each other.

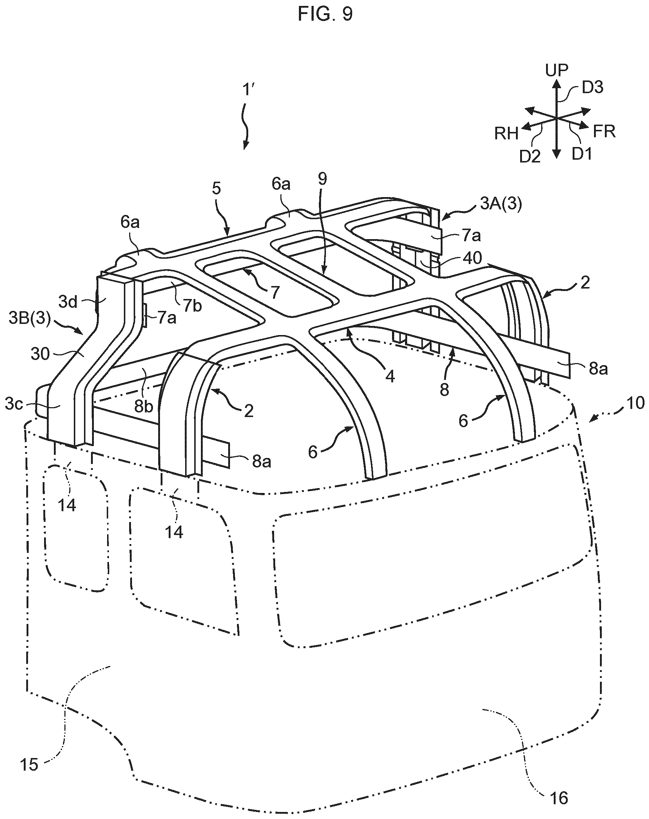

The roof panel 20 of the present embodiment has the concave for accommodating the snorkel 61 as described above, and thus, is in an asymmetrical shape. Accordingly, in the present embodiment, as illustrated in FIG. 9, among the frames 2 to 9 that support the roof panel 20, the pair of rear side frames 3 have shapes different from each other. Hereinafter, of the pair of rear side frames 3, a first rear side frame 3A arranged on the left side is also referred to as a "left rear side frame 3A" and a second rear side frame 3B arranged on the right side is also referred to as a "right rear side frame 3B".

In the present embodiment, the fragile portion 40 is provided only in the left rear side frame 3A (the first one of the pair of rear side frames 3). In other words, the right rear side frame 3B (the second rear side frame 3) on the side where the intake duct 60 is disposed is not provided with the fragile portion 40. The left rear side frame 3A provided with the fragile portion 40 has the configuration similar to that of the rear side frames 3 described in the above embodiment.

On the other hand, the right rear side frame 3B without the fragile portion 40 includes a bent portion 30 bent inward in the vehicle width direction D2 for arranging the intake duct 60. The bent portion 30 has a shape corresponding to the above-described concave provided in the roof panel 20. Such a bent portion 30 is provided only in the right rear side frame 3B on the side where the intake duct 60 is disposed, and is not provided in the left rear side frame 3A on the opposite side.

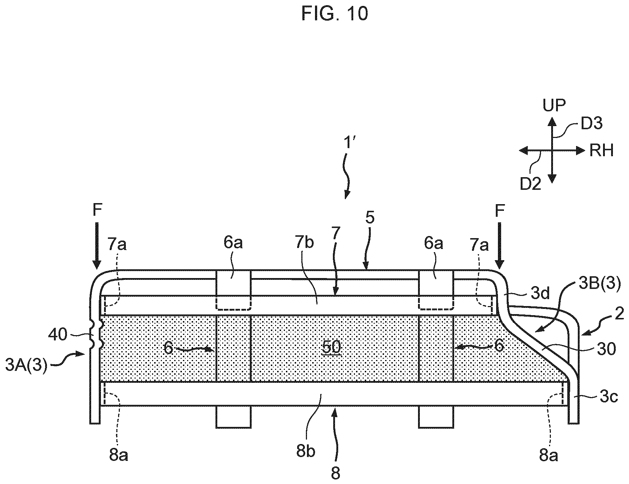

As illustrated in FIGS. 9 and 10, the right rear side frame 3B of the present embodiment includes: a lower portion 3c extending upward substantially straight from the side face 15 on the right side; the above-mentioned bent portion 30 obliquely bent inward in the vehicle width direction D2 (to the left side in the present embodiment) and upward from the lower portion 3c; and an upper portion 3d extending upward substantially straight from the bent portion 30. In the right rear side frame 3B, since the bent portion 30 is provided between the lower portion 3c and the upper portion 3d as such, the upper portion 3d is disposed above and on the inside in the vehicle width direction D2 from the lower portion 3c.

To the upper portion 3d of the right rear side frame 3B, a first one (on the right side in the present embodiment) of the upper arm portions 7a of the upper frame 7 is coupled. To the lower portion 3c of the right rear side frame 3B, a first one (on the right side in the present embodiment) of the lower arm portions 8a of the lower frame 8 is coupled. Although not illustrated in detail, the right rear side frame 3B may have a structure that forms a closed cross section in a similar manner to the left rear side frame 3A. Further, in the right rear side frame 3B, a bead similar to the above bead 39 for reinforcement may be formed in a linear shape extending in the vehicle height direction D3.

### <2-2. Actions and Effects>

Since the right rear side frame 3B of the present embodiment has the bent portion 30 bent inward in the vehicle width direction D2, as compared with one without the bent portion 30, the right rear side frame 3B easily collapses inward in the vehicle width direction D2 when the load F is input from above, and is easily crushed in the vehicle height direction D3. Due to this, if the fragile portion 40 is not provided in either one of the rear side frames 3, the crushing speed difference easily occurs between the left rear side frame 3A and the right rear side frame 3B.

In contrast, in the high roof structure 1', since the fragile portion 40 is provided only in the left rear side frame 3A, when the load F is input from above, the fragile portion 40 of the left rear side frame 3A is crushed in the vehicle height direction D3. This causes the left rear side frame 3A to be compressed in the vehicle height direction D3, so that even if the right rear side frame 3B collapses inward in the vehicle width direction D2, the crushing speed difference can be reduced between the left rear side frame 3A and the right rear side frame 3B.

Therefore, according to the high roof structure 1', even in cases where the bent portion 30 is provided in either one of the rear side frames 3, the distribution of the load F to the pair of rear side frames 3 can be equalized. This can suppress not only the deviation of the load F due to the height difference H2 between the front side frames 2 and the rear side frames 3, but also the deviation of the load F due to the crushing speed difference between the pair of rear side frames 3. Hence, the deformation of the cab body 10 can be further suppressed.

Moreover, according to the upper frame 7 that connects the left rear side frame 3A with the fragile portion 40 and the right rear side frame 3B with the bent portion 30, the right rear side frame 3B can be suppressed from collapsing inward in the vehicle width direction D2 without hindering the crushing of the fragile portion 40 as described above. Further, according to the upper frame 7, the respective crushing speeds in the vehicle height direction D3 of the rear side frames 3 can be equal to each other as described above. Therefore, even in cases where the bent portion 30 is provided in either one of the rear side frames 3, it is possible to suppress the deviation of the load F in the front side frames 2 and the rear side frames 3 as described above. Thus, the deformation of the cab body 10 can be further suppressed.

In addition, according to the high roof structure 1' of the present embodiment, the same actions and effects can be obtained from configurations similar to those of the first embodiment.

### <3. Modifications>

The configuration of the fragile portion 40 described above is an example. The fragile portion 40 may omit the missing part 41 or the recesses 42, or may be formed by a configuration other than the missing part 41 and the recesses 42.

The configuration of the rear side frames 3 described above is also an example. The closed cross section of the rear side frames 3 may be formed by, for example, joining the above-described outer frame 32 having the hat-shaped cross section and an inner frame in a flat plate shape, or may be formed by a single tube member. Alternatively, the rear side frames 3 may have a structure that does not form a closed cross section. The structure of the front side frames 2 is not particularly limited, either.

The high roof structures 1 and 1' may be any configuration as long as the high roof structures 1 and 1' include the pair of front side frames 2, the pair of rear side frames 3, and at least one fragile portion 40. As such, even if the front roof frame 4, the rear roof frame 5, etc. are omitted, according to the high roof structures 1 and 1', since the fragile portion 40 is provided, the deformation of the cab body 10 can be suppressed against the load F from above as described above.

The long roof frame 6 may be coupled to at least the front roof frame 4 and the rear roof frame 5. Thus, the long roof frame 6 may omit the extension portion 6a coupled to the rear side frame 3.

The lower frame 8 may be coupled to at least the rear side frames 3, and may be uncoupled from the front side frames 2. When not coupled to the front side frames, the lower frame 8 doesn't have to extend to the front side further than the rear side frames 3.

The above second embodiment illustrates the intake duct 60 provided on the upper right side of the cab 12, but contrary to this, the intake duct 60 may be provided on the upper left side of the cab 12. In this case, the bent portion 30 may be provided in the left rear side frame 3A and the fragile portion 40 may be provided only in the right rear side frame 3B. The specific shape of the bent portion 30 can be appropriately changed in accordance with the shape of the intake duct 60.

<4. Appendix>

With reference to the above embodiments, the following appendices are further disclosed.

### (Appendix 1)

A high roof structure of a truck, the high roof structure being mounted on a cab body that has an open ceiling and being provided with a roof panel that inclines so as to gradually increase a vehicle height from a front side to a rear side, the high roof structure comprising:
a pair of front side frames that respectively erect from a pair of side faces spaced apart from each other in a vehicle width direction in the cab body, and that support the roof panel;
a pair of rear side frames that respectively erect from the pair of side faces on the rear side of the front side frames to be higher than the front side frames and that support the roof panel; and
a fragile portion provided in at least one of the rear side frames and having a low strength relative to portions adjacent to the fragile portion in a vehicle height direction.

### (Appendix 2)

The high roof structure according to appendix 1, further comprising:
a front roof frame that connects respective upper ends of the front side frames to each other; and
a rear roof frame that connects respective upper ends of the rear side frames to each other.

### (Appendix 3)

The high roof structure according to appendix 2, further comprising
a long roof frame that extends in an inclined manner along the roof panel from a front face disposed in front of the pair of side faces in the cab body and that is coupled to the front roof frame and the rear roof frame.

### (Appendix 4)

The high roof structure according to any one of appendices 1 to 3, wherein
a dimension in the vehicle height direction of the fragile portion is set to be equal to a height difference between the front side frames and the rear side frames.

### (Appendix 5)

The high roof structure according to any one of appendices 1 to 4, wherein:
the rear side frames include an inner frame and an outer frame that is disposed outside the inner frame in the vehicle width direction and that forms a closed cross section with the inner frame; and
the fragile portion includes a missing part at which the inner frame is divided.

### (Appendix 6)

The high roof structure according to any one of appendices 1 to 5, wherein
the fragile portion includes two recesses that each extend in a vehicle length direction in the rear side frames and that are spaced apart from each other in the vehicle height direction.

### (Appendix 7)

The high roof structure according to any one of appendices 1 to 6, further comprising
an upper frame that connects the rear side frames to each other on the rear side of the rear side frames and above the fragile portion.

### (Appendix 8)

The high roof structure according to any one of appendices 1 to 7, further comprising
a lower frame that connects the rear side frames to each other on the rear side of the rear side frames and below the fragile portion.

### (Appendix 9)

The high roof structure according to appendix 8 depending from appendix 7, wherein
a region surrounded by the upper frame, the lower frame, and the rear side frames is provided with no frames.

### (Appendix 10)

The high roof structure according to appendix 8 or 9, wherein
the lower frame extends to the front side further than the rear side frames and is coupled to the front side frames.

### (Appendix 11)

The high roof structure according to any one of appendices 1 to 10, wherein:
the fragile portion is provided only in a first one of the rear side frames; and
a second one of the rear side frames, in which the fragile portion is not provided, includes a bent portion bent inward in the vehicle width direction for arranging an intake duct.

### [Reference Signs List]

- 1,1': high roof structure (high roof structure of truck)
- 2: front side frame
- 3: rear side frame
- 3A: left rear side frame
- 3B: right rear side frame
- 3c: lower portion
- 3d: upper portion
- 4: front roof frame
- 5: rear roof frame
- 6: long roof frame
- 6a: extension portion
- 7: upper frame
- 7a: upper arm portion
- 7b: upper connecting portion
- 8: lower frame
- 8a: lower arm portion
- 8b: lower connecting portion
- 9: auxiliary roof frame
- 10: cab body
- 11: truck
- 12: cab
- 13: mounted object
- 14: stiffener
- 15: side face
- 16: front face
- 20: roof panel
- 21: central panel
- 22: side panel
- 30: bent portion
- 31: inner frame
- 32: outer frame
- 33: upper member
- 34: lower member
- 35: flange
- 36: web
- 37: web
- 38: flange
- 39: bead
- 40: fragile portion
- 41: missing part
- 42: recess
- 50: region
- 60: intake duct
- 61: snorkel
- 62: opening
- 63: louver
- D1: vehicle length direction (front-rear direction)
- D2: vehicle width direction (left-right direction)
- D3: vehicle height direction (up-down direction)
- F: load
- H: horizontal plane
- H1: height dimension
- H2: height difference

## Claims

1. A high roof structure of a truck, the high roof structure being mounted on a cab body that has an open ceiling and being provided with a roof panel that inclines so as to gradually increase a vehicle height from a front side to a rear side, the high roof structure comprising:
a pair of front side frames that respectively erect from a pair of side faces spaced apart from each other in a vehicle width direction in the cab body, and that support the roof panel;
a pair of rear side frames that respectively erect from the pair of side faces on the rear side of the front side frames to be higher than the front side frames and that support the roof panel; and
a fragile portion provided in at least one of the rear side frames and having a low strength relative to portions adjacent to the fragile portion in a vehicle height direction.

2. The high roof structure according to claim 1, further comprising:
a front roof frame that connects respective upper ends of the front side frames to each other; and
a rear roof frame that connects respective upper ends of the rear side frames to each other.

3. The high roof structure according to claim 2, further comprising
a long roof frame that extends in an inclined manner along the roof panel from a front face disposed in front of the pair of side faces in the cab body and that is coupled to the front roof frame and the rear roof frame.

4. The high roof structure according to claim 1, wherein
a dimension in the vehicle height direction of the fragile portion is set to be equal to a height difference between the front side frames and the rear side frames.

5. The high roof structure according to claim 1, wherein:
the rear side frames include an inner frame and an outer frame that is disposed outside the inner frame in the vehicle width direction and that forms a closed cross section with the inner frame; and
the fragile portion includes a missing part at which the inner frame is divided.

6. The high roof structure according to claim 1, wherein
the fragile portion includes two recesses that each extend in a vehicle length direction in the rear side frames and that are spaced apart from each other in the vehicle height direction.

7. The high roof structure according to claim 1, further comprising
an upper frame that connects the rear side frames to each other on the rear side of the rear side frames and above the fragile portion.

8. The high roof structure according to claim 1, further comprising
a lower frame that connects the rear side frames to each other on the rear side of the rear side frames and below the fragile portion.

9. The high roof structure according to claim 1, wherein:
the fragile portion is provided only in a first one of the rear side frames; and
a second one of the rear side frames, in which the fragile portion is not provided, includes a bent portion bent inward in the vehicle width direction for arranging an intake duct.
